# FASCICULE DE BREVET EUROPEEN

(11) **EP 3 158 897 B1**
(45) Date de publication et mention de la délivrance du brevet: **08.08.2018**
(21) Numéro de dépôt: 16194561.3
(22) Date de dépôt: 19.10.2016
(51) Int. Cl.: A47J 19/02

(54) **APPAREIL ÉLECTRIQUE DE PRÉPARATION DE JUS PAR PRESSAGE D'ALIMENTS**
ELEKTRISCHES GERÄT ZUR SAFTZUBEREITUNG DURCH PRESSEN VON NAHRUNGSMITTELN
ELECTRICAL APPLIANCE FOR PREPARING FOOD JUICE BY PRESSING

(30) Priorité: 20.10.2015 FR 1559986
(43) Date de publication de la demande: 26.04.2017
(73) Titulaire: SANTOS, 69120 Vaulx en Velin (FR)
(72) Inventeur: FOUQUET, Nicolas, 69680 CHASSIEU (FR); GELIN, Cédric, 69190 SAINT FONS (FR)
(74) Mandataire: Lavoix

(56) Documents cités:
- EP-A1- 2 659 807
- EP-A1- 2 730 200
- EP-A2- 2 326 220
- CN-A- 103 082 865
- CN-A- 104 323 693
- CN-U- 204 218 617
- KR-B1- 101 267 808

## Description

La présente invention concerne un appareil électrique de préparation de jus par pressage d'aliments.

Ce type d'appareil est bien connu : à l'intérieur d'une enceinte de séparation du jus, une vis de pressage, typiquement de forme ogivale, est entraînée en rotation par un moteur électrique ad hoc, dont la sortie mécanique est accouplée à la base de la vis, tandis que des aliments, admis en haut de l'enceinte via une goulotte d'admission vers le bas, sont, sous l'action de la vis, progressivement entraînés vers le bas et pressés contre la face intérieure du bas de l'enceinte. Le jus est collecté aux fins de sa consommation par l'utilisateur, tandis que, de manière séparée, les résidus pressés des aliments sont évacués. L'intérêt de ce type d'appareil est d'obtenir des jus de qualité, en préservant grandement leurs propriétés gustatives et organoleptiques. Des exemples de ce type d'appareil sont fournis, entre autres, dans EP 2 326 220.

Une des limitations techniques de ce type d'appareil est la taille maximale des aliments qui peuvent être pressés. En effet, pour que la vis de pressage puisse « attraper » ces aliments et commencer de les entraîner vers le bas pour les presser, il est nécessaire, pour un diamètre de vis donné, que ces aliments soient suffisamment petits, la taille maximale de ces aliments devant typiquement être inférieure au plus grand rayon de la vis de pressage. L'utilisateur est donc très souvent obligé de découper les aliments avant de les admettre dans l'appareil. Par exemple, l'admission d'une pomme entière est impossible.

Pour contourner cette difficulté, EP 2 326 220 a, par les modes de réalisation de ses figures 1 à 5, proposé d'agencer, entre la sortie de la goulotte d'admission et une partie basse de pressage de la vis, un organe de fragmentation des aliments, qui consiste en un bord de coupe ou une lame tranchante, en forme de portion d'hélice, et qui est porté solidairement par une partie haute de la vis : de par la rotation conjointe des parties haute et basse de la vis, ce bord de coupe ou cette lame balaye la sortie de la goulotte, si bien que les aliments sortant de la goulotte sont découpés en deux tranches. La mise en oeuvre d'un tel découpage des aliments par la partie haute de la vis de pressage pose cependant des difficultés pratiques. En effet, considéré isolément, ce découpage est efficace dans le sens où il conduit à ce que des morceaux d'aliment découpés sont envoyés à la partie basse de la vis en vue que cette partie basse les presse. Toutefois, du fait même de la technique de pressage par vis, la quantité d'aliments maximale qui peut être « avalée » et efficacement pressée par la partie basse de la vis est limitée alors que, pour la même vitesse d'entraînement de la vis en rotation sur elle-même, la quantité d'aliments maximale pouvant être découpée par la partie haute de cette vis est bien plus grande pour la plupart des aliments. Il en résulte que, en service, les aliments découpés par la partie haute de la vis saturent rapidement sa partie basse, qui se retrouve alors à tourner dans une purée d'aliments non totalement pressés, tout en étant incapable « d'attraper » les nouveaux morceaux d'aliments découpés du fait que ces derniers surnagent dans la purée précitée. L'appareil devient alors inutilisable et nécessite d'être totalement nettoyé.

De son côté, CN 204 218 617, qui peut être considéré comme l'état de la technique le plus proche de l'invention, propose d'agencer au sommet de la vis de pressage un outil de coupe qui, en tournant sur lui-même, découpe, notamment en tranches, les aliments sortant de la goulotte, avant que ces aliments atteignent la vis de pressage. Cet outil de coupe est entraîné en rotation sur lui-même par un premier arbre qui est coaxial mais indépendant d'un second arbre assurant l'entraînement en rotation sur elle-même de la vis de pressage. Le premier arbre est en accouplé directement à la sortie motrice d'un moteur électrique, tandis que le second arbre est accouplé également à la sortie motrice de ce moteur mais avec interposition d'un composant de décélération : la vis de pressage est ainsi entraînée en rotation x fois moins vite que l'outil de coupe, dans le but de débiter les aliments introduits dans l'appareil en petites tranches qui alimentent l'entrée de la vis de pressage. On aboutit alors à la même situation de risque de saturation que celle évoquée plus haut, ce risque de saturation étant plus ou moins marqué selon la nature des aliments introduits. L'appareil envisagé ne donne donc pas non plus satisfaction pour tous les types d'aliments possibles.

On comprend que pour contourner cette problématique, l'utilisateur peut veiller à n'introduire qu'une petite quantité d'aliments à la fois dans l'appareil et attendre qu'elle soit complètement pressée avant d'introduire une nouvelle petite quantité. Une telle approche est toutefois impensable dans le domaine des appareils professionnels.

Le but de la présente invention est de proposer un nouvel appareil du type décrit ci-dessus, qui, tout en permettant de fragmenter des aliments avant de les presser par vis, soit performant et pratique pour une grande variété d'aliments, notamment pour satisfaire aux exigences du marché professionnel.

A cet effet, l'invention a pour objet un appareil électrique de préparation de jus par pressage d'aliments, tel que défini à la revendication 1.

Une des idées à la base de l'invention est de maîtriser l'action de la vis sur les aliments à traiter en dissociant cette vis en au moins deux étages, à savoir un étage haut dont la fonction est de fragmenter les aliments à la sortie de la goulotte d'admission, et un étage bas dont la fonction est de presser les fragments d'aliment, tout en prévoyant de pouvoir entraîner chacun de ces deux étages à des vitesses respectives différentes et/ou dans des sens respectifs différents, et ce de manière réglable et indépendamment de l'autre étage. Ainsi, un cas de fonctionnement typique consiste à entraîner l'étage bas de la vis plusieurs fois plus vite que son étage haut, le cas échéant dans des sens respectifs opposés : on comprend que l'étage bas de la vis fait plusieurs tours sur lui-même pendant que l'étage haut n'en fait qu'un, de sorte que la quantité d'aliments que peut traiter l'étage bas de la vis est décuplée comparativement à la quantité qui ne serait traitée que par un seul tour de cet étage bas. Plus généralement, l'appareil conforme à l'invention permet de traiter efficacement des aliments très variés, en particulier un vaste panel de fruits et de légumes : selon que les aliments traités sont plus ou moins durs, plus ou moins juteux, plus ou moins fibreux, avec ou sans pépin, avec ou sans peau, etc..., et selon la forme géométrique et les dimensions des aliments traités, la vitesse de l'étage haut et celle de l'étage bas peuvent, en service, être chacune adaptées indépendamment l'une de l'autre et/ou le sens de rotation de l'étage haut et celui de l'étage bas peuvent, en service, être chacun adaptés, indépendamment l'un de l'autre, de manière à, à la fois, maîtriser l'action de fragmentation des aliments par l'étage haut et maîtriser l'action de pressage des fragments d'aliment par l'étage bas. En particulier, l'invention permet d'éviter que la partie basse de l'enceinte ne se retrouve saturée par une quantité de fragments d'aliment provenant de sa partie haute qui serait trop grande pour être pressée efficacement par l'étage bas de la vis ; de même, l'invention permet d'éviter une sous-alimentation, peu performante, de la partie basse de l'enceinte. En d'autres termes, tout en pressant efficacement des fragments d'aliment pour en retirer un maximum de jus ayant d'excellentes propriétés nutritives, gustatives et organoleptiques, l'appareil conforme à l'invention répond aux exigences du marché professionnel en permettant d'adapter au mieux la fragmentation des aliments à presser, grâce aux capacités d'entraînement en rotation, indépendamment l'une de l'autre, qui sont respectivement propres aux deux étages distincts de la vis. En pratique, les moyens motorisés d'entraînement des deux étages de la vis peuvent présenter des formes variées, qui sont plus ou moins sophistiquées. Des caractéristiques additionnelles avantageuses de l'appareil conforme à l'invention sont spécifiées aux revendications dépendantes.

L'invention sera mieux comprise à la lecture de la description qui va suivre, donnée uniquement à titre d'exemple et faite en se référant aux dessins sur lesquels :
- la figure 1 est une vue en perspective d'un appareil conforme à l'invention ;
- la figure 2 est une vue en perspective de l'appareil de la figure 1, avec coupe partielle ;
- les figures 3 et 4 sont des sections dans les plans III et IV de la figure 2 ;
- la figure 5 est une vue en perspective, avec coupe partielle, d'une partie seulement de l'appareil ;
- les figures 6 et 7 sont des perspectives éclatées d'une vis de l'appareil ;
- la figure 8 est une vue en élévation de la vis des figures 6 et 7, à l'état assemblé ;
- la figure 9 est une coupe selon la ligne IX-IX de la figure 8 ; et
- les figures 10 et 11 sont des vues en perspective de l'appareil de la figure 1, avec coupe partielle, qui illustrent respectivement deux positions différentes d'une sphère admise dans l'appareil.

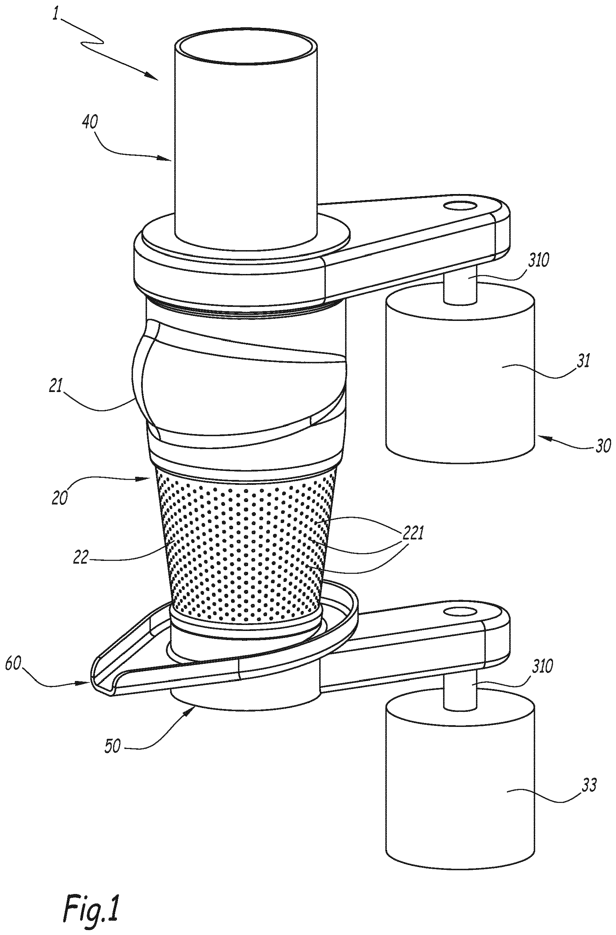

Sur les figures 1 à 11 est représenté un appareil 1 permettant de préparer des jus à partir d'aliments, notamment des fruits et des légumes, par pressage de ces aliments.

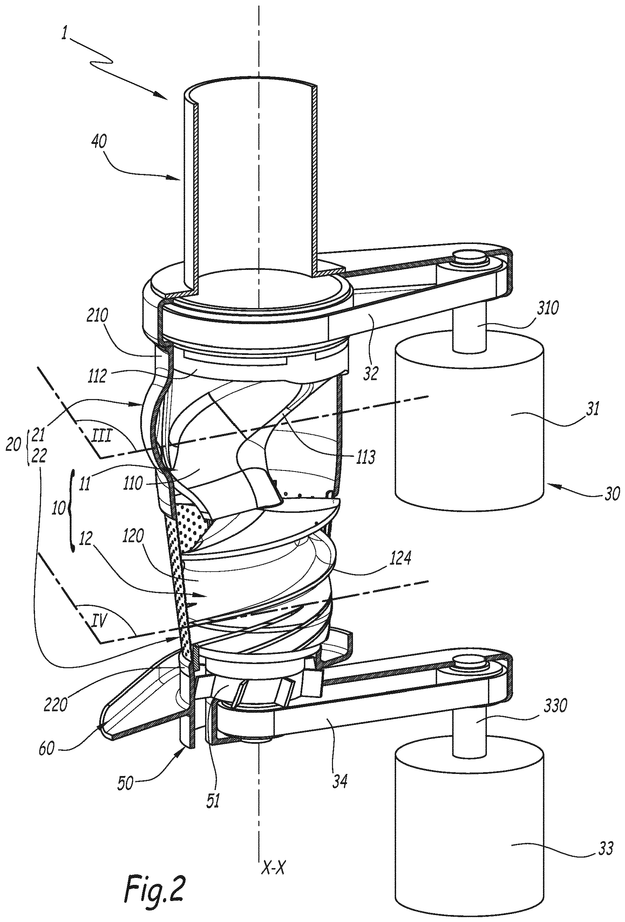

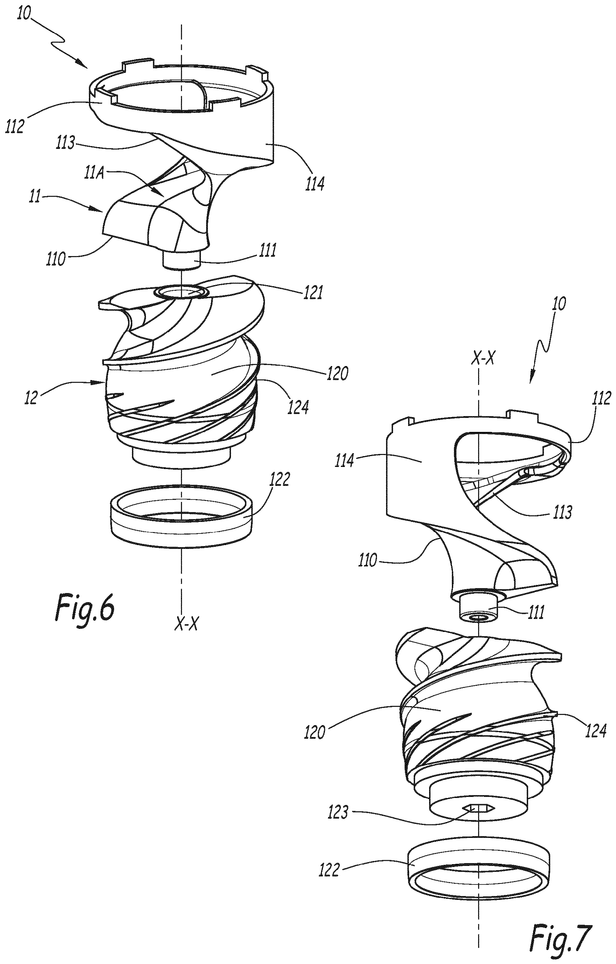

L'appareil 1 comprend une vis 10 de traitement des aliments, en particulier de pressage de ces aliments, qui est montrée seule sur les figures 6 à 9 et qui est visible, au sein de l'appareil 1, sur les figures 2 à 4, 10 et 11. Cette vis 10 définit un axe central X-X. En pratique, lorsque l'appareil 1 est utilisé, l'appareil repose sur une table ou, plus généralement, un plan de travail sensiblement horizontal de sorte que l'axe X-X est vertical ou sensiblement vertical : dans ces conditions, par commodité, le présent document est orienté par rapport à l'axe X-X, les termes « haut » et « supérieur » correspondant à une direction qui, dans l'axe X-X, est tournée vers le haut, c'est-à-dire à l'opposé du plan de travail sur lequel repose l'appareil 1. Les termes « inférieur » et « bas » correspondent à une direction axiale de sens opposé.

Comme bien visible sur les figures 2 à 4 et 6 à 9, la vis 10 inclut, de manière successive dans la direction de l'axe X-X, un étage haut 11 et un étage bas 12. L'étage haut 11 comprend un corps principal 110 qui, dans l'exemple de réalisation considéré sur les figures, présente une forme globale d'hélice s'enroulant sensiblement autour de l'axe X-X. L'étage bas 12 comporte un corps principal 120 qui, dans l'exemple considéré ici, présente une forme globale d'ogive centrée sur l'axe X-X. Quelle que soit la forme de réalisation des étages haut 11 et bas 12, en particulier de leur corps principal 110 et 120, les étages haut 11 et bas 12 sont réalisés sous forme de deux pièces distinctes qui, à l'état assemblé de la vis 10, en particulier lorsque l'appareil 1 est en service, sont alignées l'une avec l'autre dans la direction de l'axe X-X, l'extrémité basse de l'étage haut 11 étant aboutée à l'extrémité haute de l'étage bas 12.

Au sein de l'appareil 1, chacun des étages haut 11 et bas 12 de la vis 10 est entraînable en rotation sur lui-même autour de l'axe X-X, sans que ces étages haut 11 et bas 12 ne soient liés en rotation l'un à l'autre au niveau de leur interface d'aboutement : autrement dit, lorsqu'on considère la vis 10 isolément, chacun des étages haut 11 et bas 12 peut être entraîné en rotation sur lui-même autour de l'axe X-X indépendamment de l'autre étage, et ce tant en ce qui concerne la vitesse de rotation que le sens de rotation de chacun de ces étages. En pratique, au niveau de leur interface d'aboutement, les étages haut 11 et bas 12 sont, comme dans l'exemple considéré ici, en contact direct l'un avec l'autre, ce contact étant prévu librement glissant en rotation autour de l'axe X-X, étant entendu que, à titre de variante non représentée, un palier ou un organe similaire peut être interposé entre les deux étages. Dans tous les cas, les étages haut 11 et bas 12 sont désaccouplés l'un de l'autre au niveau de leur interface d'aboutement.

Suivant une option visant à renforcer l'alignement des étages haut 11 et bas 12 sur l'axe X-X à l'état assemblé de la vis 10, un relief saillant 111 de l'extrémité basse de l'étage haut 11, ayant un profil circulaire centré sur l'axe X-X, est reçu dans une cavité complémentaire 121 délimitée par l'extrémité haute de l'étage bas 12, comme bien visible sur les figures 6, 7 et 9 : ce relief 111 et cette cavité 121, plus généralement des aménagements ad hoc des extrémités respectives aboutées des étages haut 11 et bas 12 de la vis 10, coopèrent par complémentarité de formes pour rendre coaxiaux les étages haut 11 et bas 12, tout en conservant leur désaccouplement rotatif autour de l'axe X-X.

A son extrémité haute, l'étage haut 11 est conformé en un anneau 112, qui est centré sur l'axe X-X en courant de manière ininterrompue tout autour de cet axe X-X et depuis lequel s'étend vers le bas le corps en forme d'hélice 110. L'intérêt de cet anneau 112 apparaîtra plus loin.

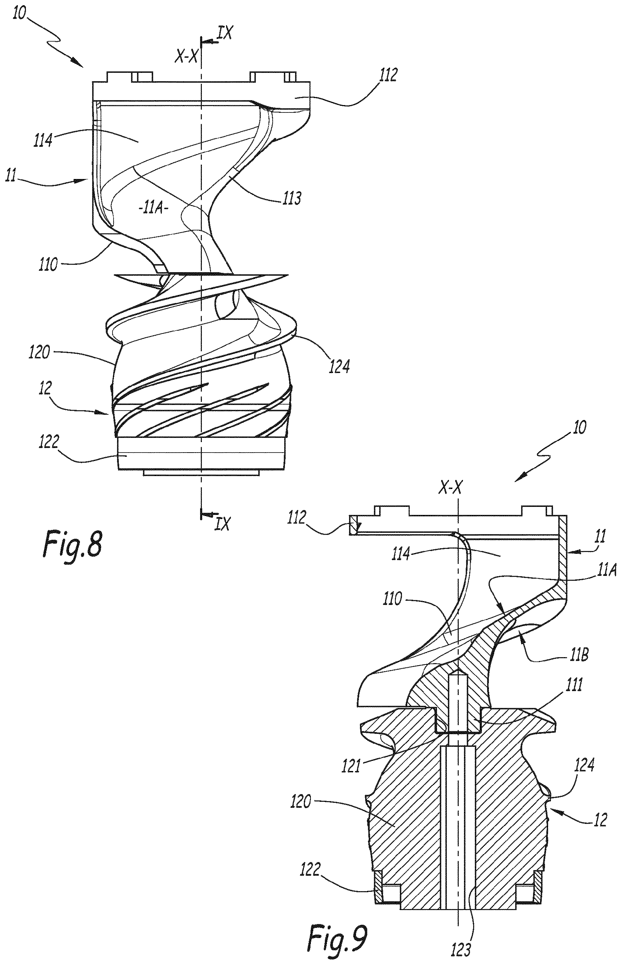

De même, pour des raisons précisées plus bas, l'extrémité basse de l'étage bas 12 est pourvue d'une lèvre périphérique 122, centrée sur l'axe X-X et courant de manière ininterrompue tout autour de cet axe. Comme bien visible sur les figures 6 et 7, dans l'exemple de réalisation considéré ici, la lèvre 122 est réalisée sous forme d'une pièce distincte du corps en forme d'ogive 120 de l'étage bas 12, la lèvre étant rapportée à l'extrémité basse de ce corps 120 de sorte que leurs faces extérieures respectives s'étendent globalement dans le prolongement l'une de l'autre, comme visible sur les figures 8 et 9. Suivant une forme de réalisation pratique, la lèvre 122 est solidarisée fixement au corps 120, et ce par tout moyen approprié, la lèvre 122 se trouvant ainsi liée en rotation autour de l'axe X-X avec le reste de l'étage bas 12.

D'autres caractéristiques de la vis 10, en particulier de ses étages haut 11 et bas 12, seront décrites plus loin, en lien avec d'autres composants de l'appareil 1.

L'appareil 1 comporte en outre une enceinte 20 à l'intérieur de laquelle la vis 10 est reçue de manière que les étages haut 11 et bas 12 de cette vis puissent être entraînés en rotation sur eux-mêmes autour de l'axe X-X par rapport à cette enceinte 20. En pratique, l'enceinte 20 est fixe par rapport au plan de travail sur lequel repose l'appareil 1 lorsque ce dernier est utilisé. D'ailleurs, de manière non représentée en détail sur les figures, l'enceinte 20 est, au sein de l'appareil 1, potentiellement solidaire d'un bâti externe de cet appareil, cet aspect n'étant pas limitatif de l'invention.

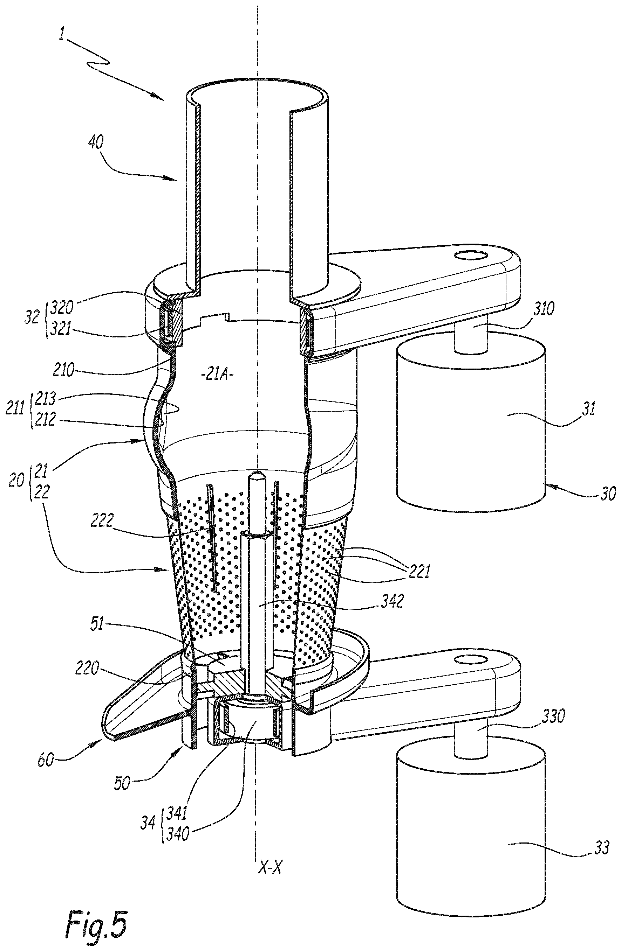

L'enceinte 20 est centrée sur un axe géométrique dans le sens où elle délimite un volume interne qui, comme bien visible sur les figures 2 à 4, 10 et 11, reçoit intérieurement la vis 10 de sorte que son axe précité se retrouve sensiblement confondu avec l'axe X-X de la vis. D'ailleurs, par simplification, l'axe précité de l'enceinte 20 est, par la suite, considéré comme étant l'axe X-X, comme représenté sur la figure 5.

Dans la forme de réalisation considérée sur les figures, l'enceinte 20 comporte, successivement dans la direction de l'axe X-X, à la fois :
- une partie haute 21, qui présente une forme globalement tubulaire, centrée sur l'axe X-X, et qui entoure l'étage haut 11 de la vis 10, en courant tout autour de l'extérieur de cet étage haut 11 et en s'étendant axialement en regard radial de cet étage haut 11, et
- une partie basse 22, qui présente une forme globalement tronconique, centrée sur l'axe X-X et convergente vers le bas, et qui entoure l'étage bas 12 de la vis 10, en courant tout autour de l'extérieur de cet étage bas 12 et en s'étendant axialement en regard radial de cet étage bas 12.

Comme bien visible sur la figure 2, la partie haute 21 de l'enceinte 20 présente une extrémité haute 210 qui entoure l'anneau 112 formant l'extrémité haute de l'étage haut 11 de la vis 10, en courant tout autour de cet anneau 112 et en s'étendant axialement en regard radial de cet anneau 112. Cette extrémité haute 210 de l'enceinte reçoit l'anneau 112 de manière sensiblement complémentaire, en centrant ainsi l'enceinte 20 sur l'axe X-X.

Egalement comme montré sur la figure 2, la partie basse 22 de l'enceinte 20 présente une extrémité basse 220 située au niveau axial de l'extrémité basse de l'étage bas 12 de la vis 10. Cette extrémité basse 220 de l'enceinte 20 entoure la lèvre 122 de l'étage bas de la vis 10, en courant tout autour de l'extérieur de cette lèvre 122 et en recevant cette lèvre 122 de manière sensiblement complémentaire. En d'autres termes, la lèvre 122 est prévue sensiblement complémentaire de la face intérieure de l'extrémité basse 220 de la partie basse 22 de l'enceinte.

D'autres caractéristiques de l'enceinte 20, en particulier de ses parties haute 21 et basse 22, seront décrites plus loin, en lien avec le reste de l'appareil 1.

L'appareil 1 comporte également des moyens 30 permettant d'entraîner les étages haut 11 et bas 12 de la vis 10 autour de l'axe X-X par rapport à l'enceinte 20.

Dans l'exemple de réalisation considéré ici, les moyens d'entraînement 30 comportent, aux fins d'entraîner l'étage haut 11 de la vis 10, un moteur électrique 31 et un mécanisme 32 d'accouplement entre la sortie motrice 310 du moteur 31 et l'étage haut 11 de la vis 10, bien visibles sur les figures 2 et 5.

Le moteur électrique 31 relève d'une technologie connue en soi et sa forme de réalisation n'est pas limitative de l'invention, ce moteur 31 n'étant d'ailleurs représenté que de manière schématique sur les figures. Bien entendu, le moteur 31 est associé à des organes de commande, qui permettent d'allumer et d'éteindre le moteur, ainsi que, avantageusement, de régler la vitesse et/ou le sens de sa sortie motrice 310. En pratique, le moteur 31 est avantageusement intégré à l'intérieur du bâti précité de l'appareil 1, ses organes de commande étant portés par la face extérieure de ce bâti aux fins de leur actionnement par l'utilisateur.

Comme bien visible sur la figure 5, le mécanisme d'accouplement 32 comprend une pièce tournante 320, qui est centrée sur l'axe X-X et qui est entraînée en rotation sur elle-même par un câble, une courroie ou un organe similaire 321, ceinturant extérieurement la pièce tournante 320 et mis en mouvement par la sortie motrice 310 du moteur 31. La pièce tournante 320 peut présenter des formes de réalisation très diverses et consiste par exemple en une couronne, un engrenage, un tambour, etc. Quelle que soit sa forme de réalisation, la pièce tournante 320 est liée en rotation à l'étage haut 11 de la vis 10, en étant solidarisée à cet étage haut 11 par tout moyen approprié, avantageusement de manière amovible pour permettre, lorsque l'appareil 1 n'est pas en service, le démontage entre la pièce tournante 320 et l'étage haut 11 de la vis 10 et ainsi faciliter le nettoyage.

Suivant un aspect particulièrement avantageux, qui est mis en oeuvre dans l'appareil 1 considéré sur les figures, la pièce tournante 320 du mécanisme d'accouplement 32 est conçue pour être solidarisée à l'anneau 112 de l'extrémité haute de l'étage haut 11 de la vis 10, de manière que cet anneau 112 relie le reste de l'étage haut 11 au mécanisme d'accouplement 32. Dans l'exemple de réalisation considéré ici, la pièce tournante 320 présente ainsi une forme globalement annulaire et, lorsque l'appareil 1 est en service, est agencée dans le prolongement vers le haut de l'anneau 112, en étant liée en rotation à cet anneau 112, par exemple par complémentarité de formes entre les tranches, respectivement haute et basse, de l'anneau 112 et de la pièce tournante 320. De par sa présence à l'extrémité haute de l'étage haut 11 de la vis 10, la pièce tournante 320 rigidifie substantiellement cette extrémité haute de l'étage haut 11, ce qui revient à dire que la pièce tournante 320 fixe fermement en position l'axe X-X de la vis 10 au sein de l'appareil 1, en reprenant les efforts radiaux appliqués à l'étage haut 11 de la vis 10 lors de sa rotation, sans que ces efforts radiaux ne soient repris, tout du moins substantiellement, à l'interface de centrage entre l'anneau 112 formant l'extrémité haute de l'étage haut 11 de la vis 10 et l'extrémité haute 210 de la partie haute 21 de l'enceinte 20.

Par ailleurs, comme bien visible sur les figures 2 et 5, les moyens d'entraînement 30 comportent en outre un moteur électrique 33 et un mécanisme d'accouplement 34, prévus aux fins de l'entraînement de l'étage bas 12 de la vis 10 en rotation autour de l'axe X-X. Comme pour le moteur 31, le moteur 33 relève d'une technologie connue en soi, non limitative de l'invention, et est associé à des organes de commande permettant son démarrage-arrêt ainsi que, avantageusement, le réglage de la vitesse et/ou du sens de rotation de sa sortie motrice 330. Suivant des considérations pratiques similaires à celles évoquées plus haut pour le moteur 31, le moteur 33 est avantageusement intégré à l'intérieur du bâti de l'appareil 1.

On notera que, dans l'exemple de réalisation considéré sur les figures, les moteurs électriques 31 et 33 sont distincts l'un de l'autre, dans le sens où leur sortie motrice 310 et 330 sont indépendantes l'une de l'autre, en particulier en ce qui concerne leur vitesse et/ou leur sens de rotation.

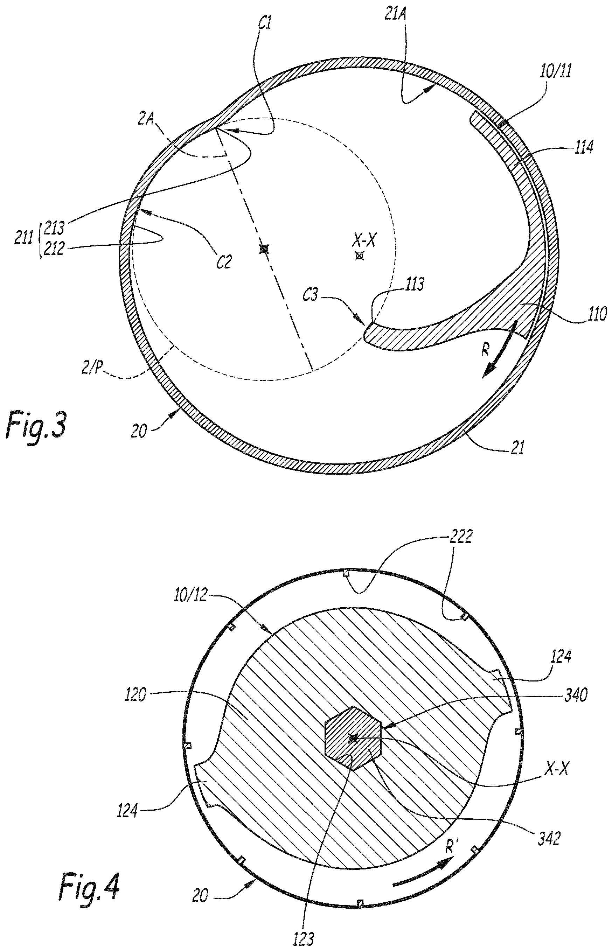

Le mécanisme d'accouplement 34 est, quant à lui, conçu pour accoupler la sortie motrice 330 du moteur 33 avec l'étage bas 12 de la vis 10 pour entraîner cet étage en rotation autour de l'axe X-X. Suivant des considérations similaires à celles évoquées ci-dessus pour le mécanisme d'accouplement 32, le mécanisme d'accouplement 34 comprend une pièce tournante 340 qui, d'une part, est liée en rotation à l'étage bas de la vis 10, en étant solidarisée à cet étage bas 12 par tout moyen approprié et avantageusement de manière amovible, et qui, d'autre part, est entraînée en rotation sur elle-même autour de l'axe X-X par un organe de transmission 341, tel qu'un câble ou une courroie, ceinturant extérieurement la pièce tournante 340 et mis en mouvement par la sortie motrice 330 du moteur 33. Dans l'exemple de réalisation considéré sur les figures, la pièce tournante 340 inclut, comme montré sur les figures 4 et 5, un arbre 342 à profil non circulaire, qui, lorsque l'appareil 1 est en service, est reçu, de manière coaxiale et ajustée, dans un alésage 123 de l'étage bas 12 de la vis 10, creusé de manière centrée sur l'axe X-X depuis l'extrémité basse de cet étage bas 12.

On notera que, dans l'exemple de réalisation considéré sur les figures, les mécanismes d'accouplement 32 et 34 sont distincts dans le sens où l'accouplement en rotation, assuré par le mécanisme 32 entre la sortie motrice 310 du moteur 31 et l'étage haut 11 de la vis 10, est indépendant de l'accouplement en rotation assuré par le mécanisme 34 entre la sortie motrice 330 du moteur 33 et l'étage bas 12 de la vis 10. D'ailleurs, dans le prolongement des considérations qui précèdent, on souligne que la tige, qui prolonge coaxialement vers le haut l'arbre 342, est à profil circulaire et, lorsque l'appareil 1 est en service, est reçue dans des alésages circulaires complémentaires, délimités respectivement par les étages haut 11 et bas 12 de la vis 10, exclusivement à des fins d'alignement de ces étages sur l'axe X-X, en particulier sans qu'il n'y ait transmission de mouvements rotatifs entre le mécanisme d'accouplement 34 et l'étage haut 11 de la vis 10.

De par la conception des moyens d'entraînement 30, l'étage haut 11 de la vis 10 est entraînable, par le moteur 31 et le mécanisme d'accouplement 32, en rotation autour de l'axe X-X à une vitesse et/ou dans un sens, qui sont différents de la vitesse et/ou du sens selon lesquels l'étage bas 12 de la vis est entraînable en rotation autour de l'axe X-X par le moteur 33 et le mécanisme d'accouplement 34, cet entraînement des étages haut 11 et bas 12 à des vitesses respectives différentes et/ou dans des sens respectifs différents étant assuré de manière indépendante entre les deux étages, du fait que le moteur 31 et le mécanisme d'accouplement 32 sont distincts du moteur 33 et du mécanisme d'accouplement 34. Par ailleurs, grâce à la capacité de réglage de chacun des moteurs 31 et 33, l'entraînement en rotation de chacun des étages haut 11 et bas 12 de la vis 10 est réglable pour ce qui concerne la vitesse et/ou le sens de rotation.

Comme représenté sur les figures 1, 2 et 5, l'appareil 1 comporte également une goulotte 40 par laquelle sont admis des aliments qui sont à traiter à l'intérieur de l'enceinte 20 par la vis 10.

Dans l'exemple de réalisation considéré ici, la goulotte 40 présente une forme globalement tubulaire, centrée sur l'axe X-X. D'autres formes de réalisation sont envisageables pour la goulotte 40, du moment que le débouché vers le bas de cette goulotte 40 soit relié à la partie haute 21 de l'enceinte 20 afin que les aliments introduits dans la goulotte atteignent cette partie haute de l'enceinte.

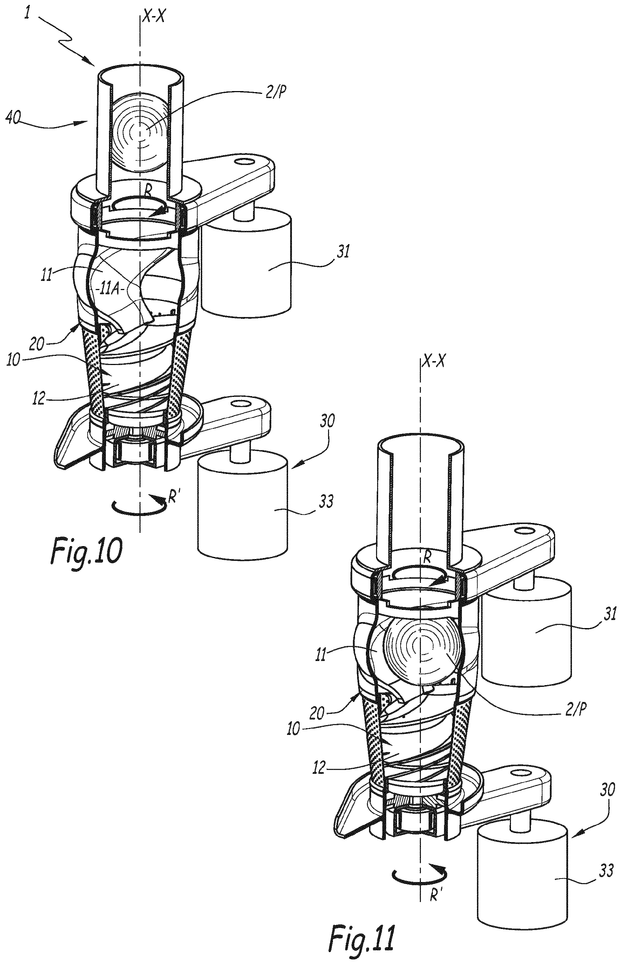

Dans tous les cas, la goulotte 40 définit géométriquement une sphère inscrite 2, qui est dessinée sur les figures 10 et 11 et qui apparaît en traits pointillés sur la figure 3 : cette sphère 2 est la sphère la plus grande qui peut être introduite dans la goulotte 40 et atteindre la sortie de celle-ci sans être bloquée dans la goulotte. En d'autres termes, comme bien visible sur la figure 10, la sphère inscrite 2 est un objet géométrique tridimensionnel fictif, consistant en la « boule la plus grosse » qui peut atteindre sans blocage, c'est-à-dire sans interférence d'arrêt complet du mouvement, la sortie de la goulotte 40 depuis l'extérieur de l'appareil 1 via l'intérieur de la goulotte. On comprend que cette sphère inscrite 2 simule le plus gros aliment sphérique qui peut être admis entier dans l'appareil 1 en vue d'en obtenir le jus. A titre d'exemple non limitatif, le diamètre intérieur de la goulotte 40 vaut 80 millimètres environ, ce qui revient à dire que la sphère inscrite présente un diamètre de même valeur.

En pratique, la goulotte 40 est fixe au sein de l'appareil 1, en étant solidarisée, directement ou indirectement, à l'enceinte 20, le débouché vers le bas de la goulotte 40 surplombant l'étage haut 11 de la vis 10. Dans l'exemple de réalisation considéré sur les figures, l'extrémité basse de la goulotte 40 est solidarisée à l'extrémité haute 210 de la partie haute 21 de l'enceinte 20 par l'intermédiaire d'une pièce d'assemblage fixe au niveau axial de laquelle est agencée la pièce tournante 320 du mécanisme d'accouplement 32. Cette pièce d'assemblage appartient par exemple au bâti précité de l'appareil 1. A titre de variante non représentée, cette pièce d'assemblage est réalisée sous la forme d'un prolongement vers le haut de l'enceinte 20 ou d'un prolongement vers le bas de la goulotte 40.

En option, non représentée sur les figures, la goulotte 40 est munie d'un poussoir qui peut notamment être utile en cas de blocage de certains aliments

Le débouché vers le bas de la goulotte 40 est relié au volume intérieur de la partie haute 21 de l'enceinte 20 par l'intérieur de l'anneau 112 formé par l'extrémité haute de l'étage haut 11 de la vis 10, ainsi que par l'intérieur de la pièce tournante 320 du mécanisme d'accouplement 32, prévue axialement traversante en conséquence. Le diamètre intérieur de l'anneau 112, ainsi que celui de la pièce tournante 320 sont au moins égaux, voire légèrement supérieurs au diamètre de la sphère inscrite 2 de sorte que cette sphère passe librement, c'est-à-dire sans interférence de blocage, de la sortie de la goulotte 40 à l'intérieur de la partie haute 21 de l'enceinte 20, comme montré à la figure 11.

Au niveau axial de l'étage haut 11 de la vis 10 et de la partie haute 21 de l'enceinte 20, il est prévu de traiter les aliments en vue de leur pressage subséquent, décrit plus loin en détail, au niveau de l'étage bas 12 de la vis 10 et de la partie basse 22 de l'enceinte 20.

A cet effet, dans la forme de réalisation considérée sur les figures, l'étage haut 11 de la vis 10 délimite une surface 11A tournée vers le haut, pour guider des aliments depuis l'intérieur de l'anneau 11 formant l'extrémité haute de cet étage haut 11 jusqu'à l'extérieur de l'étage bas 12 de la vis : comme bien visible sur les figure 8 et 9, cette surface de guidage 11A est hélicoïdale, en s'enroulant sensiblement autour de l'axe X-X et en reliant la face intérieure de l'anneau 112 à la face extérieure de l'étage bas 12 de la vis. Comme montré sur les figures 10 et 11, la surface de guidage 11A est prévue, en particulier de par son inclinaison, pour laisser la sphère inscrite 2 être déplaçable vers le bas depuis l'intérieur de l'anneau 12, suivant une trajectoire globale hélicoïdale résultant du roulement et/ou glissement de cette sphère sur la surface de guidage 11A à l'intérieur de la partie haute 21 de l'enceinte 20.

De plus, l'étage haut 11 de la vis 10 est conçu pour balayer la sortie de la goulotte 40 de manière à, à l'intérieur de la partie haute 21 de l'enceinte 20, fragmenter les aliments sortant de la goulotte, avant que les fragments d'aliment rejoignent la partie basse 22 de l'enceinte. Les moyens de balayage correspondants, dont est pourvu l'étage haut 11 de la vis 10, consistent préférentiellement en des aménagements de forme du corps principal 110 de cet étage 11 : dans l'exemple de réalisation considéré sur les figures, ces moyens de balayage comprennent une arête 113 d'écrasage des aliments, délimitée par le corps 110. Cette arête d'écrasage 113 s'étend vers le bas depuis l'anneau 112, en étant tournée vers l'axe X-X et en s'enroulant en hélice autour de cet axe, jusqu'à l'étage bas 12 de la vis 10, comme bien visible sur les figures 2, 3, 6 et 8. Pour des raisons qui apparaîtront plus loin, l'arête 113 n'a pas à être tranchante ou coupante, dans le sens où, lorsqu'elle agit sur les aliments pour les fragmenter, elle n'est pas conçue pour les trancher par division nette de la matière de l'aliment de part et d'autre de l'arête, mais cette arête 113 est conçue, de par sa forme, pour écraser l'aliment jusqu'à rupture de la matière de ce dernier par déchirement et/ou arrachage.

Afin que l'action de l'arête 113 ou, plus généralement, des moyens de balayage sur les aliments soit performante en vue de leur fragmentation, la partie haute 21 de l'enceinte 20 est intérieurement pourvue de moyens de blocage 211 qui bloquent en rotation les aliments lorsque ces derniers sont au contact de l'arête 113 ou, plus généralement, des moyens de balayage précités. Comme montré sur les figures 3 et 5, ces moyens de blocage 211 consistent préférentiellement en des aménagements de forme de la face intérieure 21A de la partie haute 21 de l'enceinte 20. Dans l'exemple de réalisation considéré ici, ces aménagements de forme comprennent une surface 212 délimitée en creux dans la face intérieure 21A de la partie haute 21 de l'enceinte 20, ainsi qu'une arête 213 de jonction entre la surface 212 et le reste de la face intérieure 21A.

L'arête d'écrasage 113, la surface en creux 212 et l'arête 213, c'est-à-dire plus généralement les moyens de balayage prévus à l'étage haut 11 de la vis 10 et les moyens de blocage 211 prévus à la partie haute 21 de l'enceinte 20, sont agencés et dimensionnés en lien avec la sphère inscrite 2, dans le sens où, à l'intérieur de la partie haute 21 de l'enceinte, cette sphère inscrite 2 est déplaçable jusqu'à une position de fragmentation, imposée à la sphère inscrite par ces moyens de balayage et ces moyens de blocage, ce déplacement de la sphère 2 jusqu'à cette position de fragmentation étant avantageusement guidé à l'intérieur de la partie haute 21 de l'enceinte par la surface de guidage 11A comme indiqué précédemment. Plus précisément, lorsque la sphère inscrite 2 occupe la position de fragmentation précitée, qui est représentée en trait plein sur la figure 11 et en traits pointillés sur la figure 3, plusieurs zones de contact sont formées entre, d'une part, la sphère inscrite et, d'autre part, l'arête 113 des moyens de balayage et les aménagements de forme de la face intérieure 21A qui constituent les moyens de blocage 211, à savoir :
- une première zone C1 de contact entre la sphère inscrite 2 et l'arête 213 de sorte que, en agissant sur la sphère par cette zone de contact C1, l'arête 213 s'oppose au roulement de la sphère dans un sens R, indiqué à la figure 3, de la rotation de l'étage haut 11 de la vis 10, contre la face intérieure 21A de la partie haute 21 de l'enceinte 20,
- une deuxième zone C2 de contact entre la sphère inscrite 2 et une région de fond de la surface en creux 212, de sorte que, en agissant sur la sphère par cette deuxième zone de contact C2, cette région de fond de la surface en creux 212 s'oppose au roulement de la sphère dans le sens opposé au sens de rotation R, contre la face intérieure 21A, la deuxième zone de contact C2 étant formée dans la moitié de la sphère, qui est tournée à l'opposé de l'axe X-X et qui est délimitée par un plan diamétral, noté 2A sur la figure 3, de la sphère, à la fois parallèle à l'axe X-X et passant par la première zone de contact C1, et
- une troisième zone C3 de contact entre la sphère inscrite 2 et l'arête d'écrasage 113, de sorte que, en agissant sur la sphère par cette troisième zone de contact C3 lors de la rotation de l'étage haut 11 dans le sens R, l'arête d'écrasage 113 écrase la sphère, cette zone de contact C3 étant formée dans la moitié de la sphère, opposée à celle dans laquelle est formée la deuxième zone de contact C2.

On notera que, pour des raisons d'illustration, les zones de contact C1, C2 et C3 ont été indiquées dans le plan de section de la figure 3, alors que, en pratique, les niveaux axiaux respectifs de ces zones de contact C1, C2 et C3 peuvent être différents les uns des autres. Quel que soit leur niveau axial, les trois zones de contact C1, C2 et C3 permettent, lors de la rotation de l'étage haut 11 de la vis 10 dans le sens R, d'appliquer à la sphère inscrite 2 des contraintes de cisaillement sensiblement dans son plan diamétral 2A : au niveau de la zone de contact C1, l'arête 213 forme une butée d'anti-roulement dans le sens de rotation R pour la sphère inscrite 2, si bien que, au niveau de la zone de contact C3, l'arête d'écrasage 113 est en mesure d'appuyer sur la moitié, tournée vers l'axe X-X, de la sphère 2 en dehors du plan diamétral 2A de cette dernière, tout en empêchant la sphère 2 d'échapper à l'action de cette arête d'écrasage 113 en s'éloignant de l'axe X-X et/ou en remontant vers le haut, en raison de son blocage, au niveau de la zone de contact C2, par la région de fond de la surface en creux 212, cette région de fond formant ainsi une butée d'anti-échappement pour la sphère.

Suivant une disposition additionnelle qui est mise en oeuvre dans l'exemple de réalisation considéré ici, l'étage haut 11 de la vis 10 inclut, dans la périphérie extérieure de son corps principal 110, une paroi 114 qui, comme bien visible sur les figures 6 à 9, présente une forme globale de demi-tube, centrée sur l'axe X-X, en bordant la périphérie extérieure de la surface de guidage 11A. Comme bien visible sur la figure 3, la face extérieure de cette paroi 114 est dimensionnée pour être sensiblement complémentaire de la face intérieure 21A de la partie haute 21 de l'enceinte 20, avec interposition d'un jeu fonctionnel pour ne pas induire d'usure : cette disposition induit un effet de raclage de la face extérieure de la paroi 114 de l'étage haut 11 de la vis 10 lors de la rotation de cet étage haut 11, afin d'éviter l'accumulation de résidus d'aliment.

Au niveau axial de l'étage bas 12 de la vis 10 et de la partie basse 22 de l'enceinte 20, les fragments d'aliment, provenant de l'étage haut 11 de la vis et de la partie haute 21 de l'enceinte, sont prévus pour être pressés afin d'en retirer le jus. A cet effet, l'étage bas 12 de la vis est extérieurement pourvu de filets 124 qui, comme bien visible sur les figures 4 et 6 à 9, s'enroulent vers le bas sur toute la hauteur axiale du corps principal 120 de cet étage bas 12. Ces filets 124 sont conçus pour, lors de la rotation de l'étage bas 12, entraînés vers le bas, à l'intérieur de la partie basse 22 de l'enceinte 20, les fragments d'aliment qui entrent dans la partie basse 22 de l'enceinte via un passage qui, vers la haut, est délimitée par l'arête d'écrasage 113, et qui, vers le bas, est délimité par la zone de raccordement entre la surface de guidage 11A et la face extérieure de l'étage bas 12. Dans leur partie haute, les filets 124 « attrapent » les fragments d'aliment venant de franchir le passage précité, cet attrapage étant facilité en prévoyant, à titre d'option avantageuse visible sur les figures 7 et 9, que l'étage haut 11 de la vis 10 délimite une surface hélicoïdale 11B tournée vers le bas, pour, lors de la rotation de l'étage haut 11 dans le sens R, pousser les fragments d'aliment vers le bas. Après avoir attrapé les fragments d'aliment, les filets 124 sont conçus, toujours lorsque l'étage bas 12 est entraîné en rotation autour de l'axe X-X, pour presser ces fragments d'aliment contre la face intérieure tronconique de la partie basse 22 de l'enceinte 20, au fur-et-à-mesure que ces fragments d'aliment sont entraînés vers le bas à l'intérieur de la partie basse 22 de l'enceinte.

De son côté, la partie basse 22 de l'enceinte 20 est pourvue d'orifices traversants 221 de tamisage des aliments, par lesquels le jus résultant du pressage des fragments d'aliment passe de l'intérieur à l'extérieur de la partie basse 22. Plus généralement, on comprend que la partie basse 22 de l'enceinte 20 est conçue pour séparer le jus des fragments d'aliment lorsque ces derniers sont pressés par l'étage bas 12 de la vis 10, ce jus passant à l'extérieur de la partie basse 23 tandis que les résidus d'aliment pressés restent à l'intérieur de cette partie basse 22. En pratique, la partie basse 22 de l'enceinte 20 inclut voire consiste en un tamis, de préférence métallique, réalisé typiquement en une tôle perforée des orifices 221. Ceci étant, en variante, cette partie basse 22 de l'enceinte peut être réalisée en plusieurs pièces, en métal et/ou en une autre matière.

A titre d'option avantageuse, permettant notamment d'améliorer le pressage des fragments d'aliment, la partie basse 22 de l'enceinte 20 est intérieurement pourvue de nervures 222, en saillie de la face intérieure de la partie basse 22 et s'étendant globalement du haut vers le bas, par exemple parallèlement à l'axe X-X, comme bien visible sur les figures 4 et 5. Ces nervures 222 permettent, dans la partie basse 22 de l'enceinte 20, de bloquer en rotation les fragments d'aliment lorsque ces derniers sont entraînés par les filets 124 de l'étage bas 12 de la vis 10.

Au niveau axial de l'extrémité basse 220 de la partie basse 22 de l'enceinte 20, les résidus d'aliment pressés sont retenus à l'intérieur de cette partie basse 22 par la lèvre 122. Cette retenue des résidus d'aliment pressés est totale tant que la lèvre 122 est appliquée de manière étanche contre la face intérieure de l'extrémité basse 220 de l'enceinte 20. Or, la lèvre 122 est conçue pour, sous l'action d'un effort suffisant, dirigé vers l'axe X-X, se déformer élastiquement vers l'axe X-X de manière à s'écarter radialement de la face intérieure de l'extrémité basse 220 de la partie basse 22 de l'enceinte, un passage entre cette face intérieure et la lèvre 22 s'ouvrant alors vers le bas depuis l'intérieur de la partie basse 22 de l'enceinte. On comprend donc que, sous l'action des résidus d'aliment pressés s'accumulant à l'extrémité basse 222 de l'enceinte 20, la lèvre 122 s'écarte élastiquement de la face intérieure de cette extrémité basse 222 de manière à laisser passer ces résidus, de la partie basse 22 de l'enceinte 20 à l'extérieur de cette enceinte, plus précisément au-dessous de l'extrémité basse 222 de l'enceinte.

Dans le prolongement des considérations qui précèdent, une option avantageuse consiste à ce que la lèvre 122 présente des aménagements permettant de régler la résistance au passage des résidus d'aliment entre la lèvre 122 et la face intérieure de l'extrémité basse 220 de la partie basse 22 de l'enceinte 20. La forme de réalisation de ces aménagements n'est pas limitative : à titre d'exemple, ces aménagements incluent un mécanisme ou un organe de renforcement ou de réduction de la souplesse de la jupe 122, notamment en agissant sur la paroi intérieure de cette lèvre.

L'appareil 1 comporte par ailleurs un conduit 50 d'évacuation des résidus d'aliment pressés. Comme montré sur les figures 1, 2 et 5, ce conduit 50 est raccordé à l'extrémité basse 220 de la partie basse 22 de l'enceinte 20 et qui reçoit les résidus sortant du passage délimité entre la face intérieure de cette extrémité basse 220 et la lèvre 122 lorsque cette dernière est écartée, par déformation souple, de cette face intérieure.

Suivant une disposition optionnelle, qui est mise en oeuvre dans l'exemple de réalisation considéré ici et qui s'avère particulièrement efficace pour évacuer les résidus, en particulier en limitant la résistance à l'écoulement de ces résidus depuis l'extrémité basse 220 de l'enceinte 20, le conduit d'évacuation 50 prolonge vers le bas cette extrémité basse 220, tout en étant intérieurement pourvu d'un dispositif tournant 51 qui, par entraînement en rotation autour de l'axe X-X, balaye la sortie du passage se formant entre la face intérieure de l'extrémité basse 220 de l'enceinte 20 et la lèvre 122 lorsque cette dernière est déformée. On comprend que ce dispositif 51 dégage toute accumulation de résidus, qui pourrait par exemple adhérer à la face intérieure du conduit 50, en particulier à l'aplomb axial de la partie du mécanisme d'accouplement 34, agencée en travers d'une partie du conduit 50. En pratique, le dispositif de balayage tournant 51 est avantageusement entraîné en rotation par le mécanisme d'accouplement 34 et le moteur associé 33, en étant par exemple en prise avec l'arbre 342, comme bien visible sur la figure 5.

Extérieurement, l'extrémité basse 220 de l'enceinte 20 et/ou le conduit d'évacuation 50 sont ceinturés par un bac récupérateur ou, plus généralement, par des moyens 60 de collecte du jus provenant de l'extérieur de la partie basse 22 de l'enceinte.

Un exemple d'utilisation de l'appareil 1 va maintenant être décrit, et ce plus spécifiquement en regard des figures 3, 10 et 11, en considérant qu'on introduit dans l'appareil 1 une pomme entière P dont la forme et les dimensions sont sensiblement identiques à celles de la sphère inscrite 2 considérée plus haut.

Dans un premier temps, l'appareil 1 est mis en marche, moyennant l'allumage de ses moteurs 31 et 33. Les étages haut 11 et bas 12 de la vis 10 sont alors mis en rotation sur eux-mêmes autour de l'axe X-X. En fonction de l'aliment à traiter, l'utilisateur règle les vitesses de rotation respectives et/ou les sens de rotation respectifs des étages haut 11 et bas 12 de la vis 10 de manière indépendante pour ces deux étages, ces vitesses respectives étant prévues différentes l'une de l'autre et/ou ces sens respectifs étant prévus différents l'un de l'autre. Si l'appareil 1 est dépourvu d'une possibilité de réglage des entraînements respectifs des étages haut 11 et bas 12 de la vis 10, un préréglage assure aux deux étages 11 et 12 de la vis 10 des vitesses de rotation respectives différentes et/ou des sens de rotation respectifs différents. A titre d'exemple adapté au traitement de la pomme P, l'étage haut 11 de la vis 10 est entraîné dans le sens de rotation R indiqué sur les figures, avec une vitesse de l'ordre de 5 à 10 tours par minute, tandis que l'étage bas 12 est entraîné dans un sens R' inverse au sens R, avec une vitesse de l'ordre de 70 à 80 tours par minute.

La pomme P est admise vers le bas à l'intérieur de la goulotte 40 et y descend, sous l'effet de son propre poids, comme représenté sur la figure 10.

Après avoir rejoint la partie haute 21 de l'enceinte 20, la pomme P roule et/ou glisse vers le bas contre la surface de guidage 11A, jusqu'à venir au contact de la face intérieure 21A de la partie haute 22 de l'enceinte: moyennant le maintien de l'entraînement en rotation de l'étage haut 11 de la vis 10, la pomme P se retrouve dans la position de fragmentation décrite plus haut et montrée sur les figures 3 et 11. Alors que la pomme P est fermement bloquée par coopération entre sa moitié externe et, à la fois, l'arête 213 et une région de fond de la surface en creux 212, l'arête 113 de l'étage haut 11 de la vis 10 écrase la moitié interne de la pomme P. Eu égard à la nature de la matière constituant la pomme P, l'arête d'écrasage 113 s'enfonce dans la pomme, tout comme l'arête 213, jusqu'à ce que la pomme se rompe, par amorce dans un plan diamétral entre ses moitiés interne et externe puis par déchirement de sa matière, en formant deux ou davantage de fragments présentant des formes irrégulières, liées à des arrachements et/ou des distorsions de la matière de la pomme.

Les fragments de pomme sont ensuite progressivement entraînés et pressés à l'interface entre l'étage bas 12 de la vis 10 et la partie basse 22 de l'enceinte 20, moyennant le maintien de l'entraînement en rotation de cet étage bas 12. Le jus résultant du pressage de ces fragments est récupéré à l'extérieur de l'enceinte 20 par les moyens de collecte 60, tandis que les résidus de pressage sont retenus à l'intérieur de l'extrémité basse 220 de la partie basse 22 de l'enceinte, jusqu'à ce que l'accumulation de ces résidus soit telle que la lèvre 122 se déforme en direction de l'axe X-X, permettant alors l'évacuation des résidus entre cette lèvre déformée et la face intérieure de l'extrémité basse 220 de l'enceinte pour que ces résidus rejoignent le conduit 50. On comprendra que, grâce à la lèvre 122, les résidus de pressage ne sont pas évacués trop rapidement, augmentant ainsi le rendement du pressage, dans le sens où un maximum de jus est obtenu. Le cas échéant, l'utilisateur ajuste la résistance qu'oppose la lèvre 122 à l'évacuation des résidus, pour optimiser le rendement, sans pour autant saturer l'intérieur de la partie basse 22 de l'enceinte 20.

Plus globalement, l'exemple décrit ci-dessus permet de comprendre l'intérêt de l'appareil 1 en ce qu'il dissocie l'entraînement de l'étage haut 11 de la vis 10 et l'entraînement de l'étage bas 12 de la vis, pour maîtriser les fonctions respectives de ces deux étages, à savoir la fonction de fragmentation pour l'étage haut 11 et la fonction de pressage pour l'étage bas 12. Ainsi, sans sacrifier la qualité du jus obtenu par l'appareil 1, ce dernier est particulièrement pratique à utiliser et garantit un bon rendement de pressage.

Divers aménagements et variantes à l'appareil 1 décrit jusqu'ici sont par ailleurs envisageables. A titre d'exemples :
- plutôt que la lèvre 122 soit solidarisée fixement à l'extrémité basse de l'étage bas 12 de la vis 10, cette lèvre peut être rapportée à cette extrémité basse de l'étage bas 12, tout en étant découplée en rotation vis-à-vis de cette dernière ; en particulier, la lèvre 122 peut être prévue fixe en rotation par rapport à l'enceinte 20 ; dans ce cas, l'étanchéité entre cette lèvre et l'extrémité basse de l'étage bas 12 de la vis 10 doit être assurée, malgré la rotation relative entre ces deux pièces ; et/ou
- afin d'augmenter encore l'éventail des aliments traités efficacement par l'appareil 1, la région de tamisage de la partie basse 22 de l'enceinte 20 peut être prévue interchangeable pour changer la taille des orifices traversants 221 ; autrement dit, la finesse du tamisage peut être modifiée, en tenant compte des aliments à traiter.

## Revendications

1. Appareil électrique (1) de préparation de jus par pressage d'aliments, comportant :
- une goulotte (40) d'admission des aliments vers le bas ;
- une vis (10) de traitement des aliments en sortie de la goulotte (40), laquelle vis est centrée sur un axe (X-X) et inclut :
- un étage haut (11) qui est pourvu de moyens (113) de balayage de la sortie de la goulotte, adaptés pour agir sur les aliments sortant de la goulotte pour les fragmenter, et
- un étage bas (12), qui est distinct de l'étage haut de la vis et qui est conçu pour entraîner vers le bas et presser les fragments d'aliment provenant de l'étage haut de la vis ;
- une enceinte (20) de réception de la vis (10), laquelle enceinte est sensiblement centrée sur l'axe (X-X) et inclut :
- une partie haute (21), qui est reliée à la sortie de la goulotte (40) pour recevoir les aliments sortant de la goulotte et qui entoure l'étage haut (11) de la vis (10), et
- une partie basse (22), qui entoure l'étage bas (12) de la vis et qui est conçue pour séparer le jus des fragments d'aliment lorsque ces derniers sont pressés par l'étage bas de la vis ; et
- des moyens (30) d'entraînement de la vis (10), qui incluent au moins un moteur électrique (31, 33) et qui sont adaptés pour entraîner les étages haut (11) et bas (12) de la vis autour de l'axe (X-X), par rapport à l'enceinte (20), à des vitesses respectives différentes et/ou dans des sens respectifs différents,
**caractérisé en ce que** les moyens d'entraînement (30) sont conçus pour entraîner chacun des étages haut (11) et bas (12) de la vis (10) de manière réglable et indépendamment de l'autre étage.

2. Appareil suivant la revendication 1, **caractérisé en ce que** les moyens d'entraînement (30) incluent des premier (31) et second (33) moteurs électriques qui sont distincts l'un de l'autre, une sortie motrice (310) du premier moteur étant accouplée à l'étage haut (11) de la vis (10) tandis qu'une sortie motrice (330) du second moteur est accouplée à l'étage bas (12) de la vis.

3. Appareil suivant la revendication 2, **caractérisé en ce que** les moyens d'entraînement (30) incluent en outre des premier (32) et second (34) mécanismes d'accouplement qui sont distincts l'un de l'autre, le premier mécanisme d'accouplement accouplant en rotation la sortie motrice (310) du premier moteur (31) avec l'étage haut (11) de la vis (10) tandis que le second mécanisme d'accouplement accouple en rotation la sortie motrice (330) du second moteur (33) avec l'étage bas (12) de la vis.

4. Appareil suivant la revendication 3, **caractérisé en ce que** chaque mécanisme d'accouplement (32, 34) comprend :
- une pièce tournante (320, 340), qui est centrée sur l'axe (X-X) et qui est solidarisée à l'étage (11, 12) de la vis (10) auquel le mécanisme d'accouplement est associé, et
- un organe de transmission (321, 341), qui ceinture extérieurement la pièce tournante du mécanisme d'accouplement de manière à pouvoir entraîner cette pièce tournante en rotation sur elle-même, et qui est mis en mouvement par la sortie motrice (310, 330) du moteur (31, 33) auquel le mécanisme d'accouplement est associé.

5. Appareil suivant l'une quelconque des revendications précédentes, **caractérisé en ce qu'**une extrémité haute de l'étage haut (11) de la vis (10) forme un anneau (112), qui est centré sur l'axe (X-X), depuis lequel les moyens de balayage (113) s'étendent vers le bas, par l'intérieur duquel la sortie de la goulotte (40) est reliée à la partie haute (21) de l'enceinte (20), et qui relie le reste de l'étage haut de la vis aux moyens d'entraînement (30).

6. Appareil suivant les revendications 4 et 5 prises ensemble, **caractérisé en ce que** la pièce tournante (320) du premier mécanisme d'accouplement (32) est solidarisée à l'anneau (112) de l'étage haut (11) de la vis (10).

7. Appareil suivant la revendication 6, **caractérisé en ce que** la pièce tournante (320) du premier mécanisme d'accouplement (32) est annulaire et est agencée dans le prolongement vers le haut de l'anneau (112).

8. Appareil suivant l'une quelconque des revendications précédentes, **caractérisé en ce que** l'appareil (1) comporte en outre un conduit (50) d'évacuation des résidus de pressage, qui est raccordé à l'extrémité basse (220) de la partie basse (22) de l'enceinte (20), et **en ce que** l'extrémité basse de l'étage bas (12) de la vis (10) est pourvue d'une lèvre périphérique (122), qui est sensiblement complémentaire de la face intérieure de l'extrémité basse (220) de la partie basse (22) de l'enceinte (20) et qui est adaptée pour, sous l'action des résidus de pressage entraînés par l'étage bas (12) de la vis (10), s'écarter élastiquement de la face intérieure de l'extrémité basse de la partie basse de l'enceinte de manière à laisser passer ces résidus de pressage depuis la partie basse de l'enceinte au conduit d'évacuation (50).

9. Appareil suivant la revendication 8, **caractérisé en ce que** la lèvre (122) est pourvue d'aménagements de réglage de la résistance au passage des résidus de pressage entre elle et la face intérieure de l'extrémité basse (220) de la partie basse (22) de l'enceinte (20).

10. Appareil suivant l'une des revendications 8 ou 9, **caractérisé en ce que** le conduit d'évacuation (50) prolonge vers le bas l'extrémité basse (220) de la partie basse (22) de l'enceinte (20) et est pourvu d'un dispositif de balayage tournant (51), qui est entraîné en rotation autour de l'axe (X-X) par les moyens d'entraînement (30) et qui balaye la sortie du passage se formant entre la face intérieure de l'extrémité basse de la partie basse de l'enceinte et la lèvre (122) lorsque celle-ci est déformée.

11. Appareil suivant l'une quelconque des revendications précédentes, **caractérisé en ce que** la sortie de la goulotte (40) est intérieurement centrée sur l'axe (X-X).

12. Appareil suivant l'une quelconque des revendications précédentes, **caractérisé en ce que** toute la goulotte (40) est intérieurement centrée sur l'axe (X-X).

13. Appareil suivant l'une quelconque des revendications précédentes, **caractérisé en ce que** les moyens de balayage comprennent une arête (113) délimitée par l'étage haut (11) de la vis (10), qui est conformée pour écraser les aliments.

14. Appareil suivant l'une quelconque des revendications 1 à 12, **caractérisé en ce que** les moyens de balayage consistent en une arête (113) délimitée par l'étage haut (11) de la vis (10), qui est conformée pour écraser les aliments.

15. Appareil suivant l'une quelconque des revendications précédentes, **caractérisé en ce que** la goulotte (40) définit géométriquement une sphère inscrite (2) à même de passer librement par la goulotte, et **en ce que** la partie haute (21) de l'enceinte (20) est intérieurement pourvue de moyens (211) de blocage des aliments, adaptée pour bloquer en rotation les aliments lorsque ces derniers sont au contact des moyens de balayage (113), de sorte que, en sortie de la goulotte (40), ladite sphère inscrite (2) est déplaçable à l'intérieur de cette partie haute de l'enceinte, jusqu'à une position de fragmentation dans laquelle :
- par formation d'une première zone (C1) de contact entre la sphère inscrite (2) et les moyens de blocage (211), les moyens de blocage s'opposent au roulement de la sphère inscrite dans un sens (R) de rotation de l'étage haut (11) de la vis (10) contre la face intérieure (21A) de la partie haute (21) de l'enceinte (20),
- par formation d'une deuxième zone (C2) de contact entre la sphère inscrite (2) et les moyens de blocage (211), les moyens de blocage s'opposent au roulement de la sphère inscrite dans un sens opposé au sens (R) de la rotation de l'étage haut (11) de la vis (10) contre la face intérieure (21A) de la partie haute (21) de l'enceinte (20), cette deuxième zone de contact (C2) étant formée dans une moitié de la sphère inscrite (2), qui est tournée à l'opposé de l'axe (X-X) et qui est délimitée par un plan diamétral (2A) de la sphère inscrite, à la fois sensiblement parallèle à l'axe (X-X) et passant par la première zone de contact (C1), et
- par formation d'une troisième zone (C3) de contact entre la sphère inscrite (2) et les moyens de balayage (113), les moyens de balayage écrasent la sphère inscrite dans le sens (R) de la rotation de l'étage haut (11) de la vis (10), cette troisième zone de contact (C3) étant formée dans la moitié de la sphère inscrite, opposée à celle dans laquelle est formée la deuxième zone de contact (C2).

## Patentansprüche

1. Elektrisches Gerät (1) zur Herstellung von Saft durch Pressen von Lebensmitteln, umfassend:
- einen Schacht (40) zur Aufnahme nach unten von Lebensmitteln;
- eine Schraube (10) zur Behandlung der Lebensmittel am Austritt des Schachts (40), wobei die Schraube auf eine Achse (X-X) zentriert ist und umfasst:
- eine obere Stufe (11), die mit Mitteln (113) zum Abstreifen des Austritts des Schachts versehen ist, die ausgebildet sind, auf die den Schacht verlassenden Lebensmittel zu wirken, um sie zu zerkleinern, und
- eine untere Stufe (12), die zu der oberen Stufe der Schraube unterschiedlich ist und die dazu ausgebildet ist, die zerkleinerten Lebensmittel, die von der oberen Stufe der Schraube herrühren, nach unten mitzunehmen und zu pressen;
- eine Wand (20) zur Aufnahme der Schraube (10), wobei die Wand im Wesentlichen auf die Achse (X-X) zentriert ist und umfasst:
- einen oberen Teil (21), der mit dem Austritt des Schachts (40) verbunden ist, um die aus dem Schacht austretenden Lebensmittel aufzunehmen, und der die obere Stufe (11) der Schraube (10) umgibt, und
- einen unteren Teil (22), der die untere Stufe (12) der Schraube umgibt und der dazu ausgebildet ist, den Saft von den zerkleinerten Lebensmitteln zu trennen, wenn Letztere von der unteren Stufe der Schraube gepresst werden; und
- Mittel (30) für den Antrieb der Schraube (10), die mindestens einen elektrischen Motor (31, 33) umfassen und die ausgebildet sind, die obere (11) und untere (12) Stufe der Schraube um die Achse (X-X) in Bezug auf die Wand (20) mit jeweils unterschiedlichen Geschwindigkeiten und/oder in jeweiligen unterschiedlichen Richtungen anzutreiben,
**dadurch gekennzeichnet, dass** die Antriebsmittel (30) ausgebildet sind, jeweils die obere (11) und untere (12) Stufe der Schraube (10) in regelbarer Weise und unabhängig von der anderen Stufe anzutreiben.

2. Gerät nach Anspruch 1, **dadurch gekennzeichnet, dass** die Antriebsmittel (30) einen ersten (31) und zweiten (33) elektrischen Motor einschließen, die zueinander unterschiedlich sind, wobei ein antreibender Ausgang (310) des ersten Motors mit der oberen Stufe (11) der Schraube (10) gekoppelt ist, während ein antreibender Ausgang (330) des zweiten Motors mit der unteren Stufe (12) der Schraube gekoppelt ist.

3. Gerät nach Anspruch 2, **dadurch gekennzeichnet, dass** die Antriebsmittel (30) außerdem einen ersten (32) und einen zweiten (34) Koppelmechanismus, die zueinander unterschiedlich sind, einschließen, wobei der erste Koppelmechanismus den antreibenden Ausgang (310) des ersten Motors (31) mit der oberen Stufe (11) der Schraube (10) hinsichtlich der Drehung koppelt, während der zweite Koppelmechanismus den antreibenden Ausgang (330) des zweiten Motors (33) mit der unteren Stufe (12) der Schraube hinsichtlich der Drehung koppelt.

4. Gerät nach Anspruch 3, **dadurch gekennzeichnet, dass** jeder Koppelmechanismus (32, 34) umfasst:
- ein Drehteil (320, 340), das auf die Achse (X-X) zentriert ist und das mit der Stufe (11, 12) der Schraube (12) verbunden ist, der der Koppelmechanismus zugeordnet ist, und
- ein Übertragungselement (321, 341), das außen das Drehteil des Koppelmechanismus umgreift, derart, dass dieses Drehteil sich um sich selbst drehen kann, und das durch den Antriebsausgang (310, 330) des Motors (31, 33), dem der Koppelmechanismus zugeordnet ist, in Bewegung gesetzt wird.

5. Gerät nach einem beliebigen der vorhergehenden Ansprüche, **dadurch gekennzeichnet, dass** ein oberes Ende der oberen Stufe (11) der Schraube (10) einen Ring (112) bildet, der auf die Achse (X-X) zentriert ist, von dem die Abstreifmittel (113) sich nach unten erstrecken, durch dessen Inneres der Austritt des Schachts (40) mit dem oberen Teil (21) der Wand (20) verbunden ist und der den Rest der oberen Stufe der Schraube mit den Antriebsmitteln (30) verbindet.

6. Gerät nach Anspruch 4 und 5 zusammengenommen, **dadurch gekennzeichnet, dass** das Drehteil (320) des ersten Koppelmechanismus (32) mit dem Ring (112) der oberen Stufe (11) der Schraube (10) verbunden ist.

7. Gerät nach Anspruch 6, **dadurch gekennzeichnet, dass** das Drehteil (320) des ersten Koppelmechanismus (32) ringförmig ist und in der Verlängerung in Bezug auf den Ring (112) nach oben angeordnet ist.

8. Gerät nach einem beliebigen der vorhergehenden Ansprüche, **dadurch gekennzeichnet, dass** das Gerät (1) außerdem einen Kanal (50) zum Abführen der Pressreste aufweist, der mit dem unteren Ende (220) des unteren Teils (22) der Wand (20) verbunden ist, und dass das untere Ende der unteren Stufe (12) der Schraube (10) mit einer Umfangslippe (122) versehen ist, die im Wesentlichen komplementär zu der Innenfläche des unteren Endes (220) des unteren Teils (22) der Wand (20) ist und die ausgebildet ist, unter der Wirkung der Pressreste, die durch die untere Stufe (12) der Schraube (10) mitgenommen werden, sich elastisch von der Innenfläche des unteren Endes des unteren Teils der Wand zu entfernen, derart, dass diese Pressreste von dem unteren Teil der Wand zu dem Abführkanal (50) passieren können.

9. Gerät nach Anspruch 8, **dadurch gekennzeichnet, dass** die Lippe (122) mit Einrichtungen zur Regelung des Widerstands gegen den Durchgang der Pressreste zwischen sich und der Innenfläche des unteren Endes (220) des unteren Teils (22) der Wand (20) versehen ist.

10. Gerät nach einem der Ansprüche 8 oder 9, **dadurch gekennzeichnet, dass** der Abführkanal (50) sich nach unten zu dem unteren Ende (220) des unteren Teils (22) der Wand (20) verlängert und mit einer sich drehenden Abstreifvorrichtung (51) versehen ist, die zur Drehung um die Achse (X-X) durch die Antriebsmittel (30) angetrieben wird und die den Ausgang des Durchgangs überstreicht, der zwischen der Innenfläche des unteren Endes des unteren Teils der Wand und der Lippe (122) gebildet wird, wenn diese deformiert wird.

11. Gerät nach einem beliebigen der vorhergehenden Ansprüche, **dadurch gekennzeichnet, dass** der Austritt des Schachts (40) im Inneren auf die Achse (X-X) zentriert ist.

12. Gerät nach einem beliebigen der vorhergehenden Ansprüche, **dadurch gekennzeichnet, dass** der gesamte Schacht (40) im Inneren auf die Achse (X-X) zentriert ist.

13. Gerät nach einem beliebigen der vorhergehenden Ansprüche, **dadurch gekennzeichnet, dass** die Abstreifmittel eine Kante (113) umfassen, die durch die obere Stufe (11) der Schraube begrenzt ist und die ausgebildet ist, die Lebensmittel zu zerquetschen.

14. Gerät nach einem beliebigen der Ansprüche 1 bis 12, **dadurch gekennzeichnet, dass** die Abstreifmittel aus einer Kante (113) bestehen, die von der oberen Stufe (11) der Schraube (10) begrenzt ist und die ausgebildet ist, die Lebensmittel zu zerquetschen.

15. Gerät nach einem beliebigen der vorhergehenden Ansprüche, **dadurch gekennzeichnet, dass** der Schacht (40) geometrisch eine einbeschriebene Kugel (2), die frei durch den Schacht passieren kann, definiert und dass der obere Teil (21) der Wand (20) innen mit Mitteln (211) zum Absperren der Lebensmittel versehen ist, der ausgebildet ist, die Lebensmittel hinsichtlich der Drehung zu blockieren, wenn sie in Kontakt mit den Abstreifmitteln (113) sind, derart, dass am Austritt des Schachts (40) die einbeschriebene Kugel (2) im Inneren dieses oberen Teils der Wand bis zu einer Position der Zerkleinerung bewegbar ist, in der:
- durch Bildung einer ersten Kontaktzone (C1) zwischen der einbeschriebenen Kugel (2) und den Sperrmitteln (211), wobei sich die Sperrmittel dem Rollen der einbeschriebenen Kugel in eine Drehrichtung (R) der oberen Stufe (11) der Schraube (10) gegen die Innenfläche (21A) des oberen Teils (21) der Wand (20) entgegenstellen,
- durch Bildung einer zweiten Kontaktzone (C2) zwischen der einbeschriebenen Kugel (2) und den Sperrmitteln (211), wobei sich die Sperrmittel dem Rollen der einbeschriebenen Kugel in eine Richtung entgegengesetzt zur Drehrichtung (R) der oberen Stufe (11) der Schraube (10) gegen die Innenfläche (21A) des oberen Teils (21) der Wand (20) entgegenstellen, wobei diese zweite Kontaktzone (C2) in einer Hälfte der einbeschriebenen Kugel (2) gebildet ist, die entgegengesetzt zur Achse (X-X) gerichtet ist und die durch eine diametrale Ebene (2A) der einbeschriebenen Kugel sowohl im Wesentlichen parallel zur Achse (X-X) als auch durch die erste Kontaktzone (C1) hindurchgehend begrenzt ist, und
- durch Bildung einer dritten Kontaktzone (C3) zwischen der einbeschriebenen Kugel (2) und den Abstreifmitteln (113), wobei die Abstreifmittel die einbeschriebene Kugel in der Drehrichtung (R) der oberen Stufe (11) der Schraube (10) zerdrücken, wobei diese dritte Kontaktzone (C3) in der Hälfte der einbeschriebenen Kugel gebildet ist, die derjenigen entgegengesetzt ist, in der die zweite Kontaktzone (C2) gebildet wird.

## Claims

1. An electrical appliance (1) for preparing juice by pressing foods, including:
- a chute (40) for taking in food toward the bottom;
- a screw (10) for processing foods leaving the chute (40), said screw being centered on an axis (X-X) and including:
- an upper stage (11) that is provided with means (113) for sweeping the outlet of the chute, suitable for acting on the foods leaving the chute to fragment them, and
- a lower stage (12), which is separate from the upper stage of the screw and which is designed to drive and press the fragments of food downward coming from the upper stage of the screw;
- a chamber (20) for receiving the screw (10), this chamber being substantially centered on the axis (X-X) and including:
- an upper part (21) that is connected to the outlet of the chute (40) to receive the foods leaving the chute and that surrounds the upper stage (11) of the screw (10), and
- a lower part (22), which surrounds the lower stage (12) of the screw and is designed to separate the juice from the food fragments when the latter are pressed by the lower stage of the screw; and
- means (30) for driving the screw (10), which include at least one electric motor (31, 33) and which are suitable for driving the upper (11) and lower (12) stages of the screw around the axis (X-X), relative to the chamber (20), at different respective speeds and/or in different respective directions,
**characterized in that** the driving means (30) are designed for driving each of the upper (11) and lower (12) stages of the screw (10) adjustably and independently of the other stage.

2. The appliance according to claim 1, **characterized in that** the driving means (30) include first (31) and second (33) electric motors that are separate from one another, a driving output (310) of the first motor being coupled to the upper stage (11) of the screw (10), while a driving output (330) of the second motor is coupled to the lower stage (12) of the screw.

3. The appliance according to claim 2, **characterized in that** the driving means (30) further include first (32) and second (34) coupling mechanisms that are separate from one another, the first coupling mechanism rotatably coupling the driving output (310) of the first motor (31) with the upper stage (11) of the screw (10) while the second coupling mechanism rotatably couples the driving output (330) of the second motor (33) with the lower stage (12) of the screw.

4. The appliance according to claim 3, **characterized in that** each coupling mechanism (32, 34) comprises:
- a rotating part (320, 340), which is centered on the axis (X-X) and which is secured to the stage (11, 12) of the screw (10) with which the coupling mechanism is associated, and
- a transmission member (321, 341), which outwardly surrounds the rotating part of the coupling mechanism so as to be able to rotate this rotating part around itself, and which is set in motion by the driving output (310, 330) of the motor (31, 33) with which the coupling mechanism is associated.

5. The appliance according to any one of the preceding claims, **characterized in that** an upper end of the upper stage (11) of the screw (10) forms a ring (112), which is centered on the axis (X-X), from which the sweeping means (113) extend downward, through the inside of which the outlet of the chute (40) is connected to the upper part (21) of the chamber (20), and which connects the rest of the upper stage of the screw to the driving means (30).

6. The appliance according to claims 4 and 5 together, **characterized in that** the rotating part (320) of the first coupling mechanism (32) is secured to the ring (112) of the upper stage (11) of the screw (10).

7. The appliance according to claim 6, **characterized in that** the rotating part (320) of the first coupling mechanism (32) is annular and is arranged in the upward extension of the ring (112).

8. The appliance according to any one of the preceding claims, **characterized in that** the appliance (1) further includes a conduit (50) for discharging pressing residues, which is connected to the lower end (220) of the lower part (22) of the chamber (20), and **in that** the lower end of the lower stage (12) of the screw (10) is provided with a peripheral lip (122), which is substantially complementary to the inner face of the lower end (220) of the lower part (22) of the chamber (20) and which is suitable, under the action of the pressing residues driven by the lower stage (12) of the screw (10), for moving elastically away from the inner face of the lower end of the lower part of the chamber so as to allow these pressing residues to pass from the lower part of the chamber to the discharge conduit (50).

9. The appliance according to claim 8, **characterized in that** the lip (122) is provided with arrangements for adjusting the resistance to the passage of the pressing residues between it and the inner face of the lower end (220) of the lower part (22) of the chamber (20).

10. The appliance according to one of claims 8 or 9, **characterized in that** the discharge conduit (50) extends the lower end (220) of the lower part (22) of the chamber (20) downward and is provided with a rotating sweeping device (51), which is rotated around the axis (X-X) by the driving means (30) and which sweeps the outlet of the passage forming between the inner face of the lower end of the lower part of the chamber and the lip (122) when the latter is deformed.

11. The appliance according to any one of the preceding claims, **characterized in that** the outlet of the chute (40) is inwardly centered on the axis (X-X).

12. The appliance according to any one of the preceding claims, **characterized in that** the entire chute (40) is inwardly centered on the axis (X-X).

13. The appliance according to any one of the preceding claims, **characterized in that** the sweeping means comprise an edge (113) defined by the upper stage (11) of the screw (10), which is configured to crush the foods.

14. The appliance according to any one of claims 1 to 12, **characterized in that** the sweeping means consist of an edge (113) defined by the upper stage (11) of the screw (10), which is configured to crush the foods.

15. The appliance according to any one of the preceding claims, **characterized in that** the chute (40) geometrically defines an inscribed sphere (2) able to pass freely through the chute, and **in that** the upper part (21) of the chamber (20) is inwardly provided with means (211) for blocking foods, suitable for blocking the rotation of the foods when the latter are in contact with the sweeping means (113), such that, at the outlet of the chute (40), said inscribed sphere (2) is movable inside this upper part of the chamber, to a fragmentation position in which:
- by formation of a first contact zone (C1) between the inscribed sphere (2) and the blocking means (211), the blocking means oppose the rolling of the inscribed sphere in a rotation direction (R) of the upper stage (11) of the screw (10), against the inner face (21A) of the upper part (21) of the chamber (20),
- by formation of a second contact zone (C2) between the inscribed sphere (2) and the blocking means (211), the blocking means oppose the rolling of the inscribed sphere in a rotation direction (R) of the upper stage (11) of the screw (10), against the inner face (21A) of the upper part (21) of the chamber (20), this second contact zone (C2) being formed in half of the inscribed sphere (2), which is turned opposite the axis (X-X) and which is defined by a diametric plane (2A) of the inscribed sphere, both substantially parallel to the axis (X-X) and passing through the first contact zone (C1),
- by formation of a third contact zone (C3) between the inscribed sphere (2) and the sweeping means (113), the sweeping means crush the inscribed sphere in the direction (R) of the rotation of the upper stage (11) of the screw (10), this third contact zone (C3) being formed in the half of the inscribed sphere opposite that in which the second contact zone (C2) is formed.
